# EUROPEAN PATENT APPLICATION

(11) **EP 4 764 607 A1**
(43) Date of publication of application: **24.06.2026**
(21) Application number: 25217570.8
(22) Date of filing: 21.11.2025
(51) Int. Cl.: G01S 15/00, G01S 15/87, G01S 15/86, G01S 15/931, G01S 15/08, G01S 15/46, G01S 13/00, G01S 13/87, G01S 13/86, G01S 13/931, G01S 13/08

(54) **DRIVING ASSISTANCE DEVICE**

(30) Priority: 18.12.2024 JP 2024221603
(71) Applicant: AISIN CORPORATION, Aichi 448-8650 (JP); HONDA MOTOR CO., LTD., Tokyo 105-8404 (JP)
(72) Inventor: UKAI, Yuichi, Kariya, 448-8650 (JP); TAKAKU, Hiroki, Tokyo, 105-8404 (JP); XIU, Zekun, Tokyo, 105-8404 (JP)
(74) Representative: TBK

(57) **Abstract**

On condition that an object whose position has been identified by the probe wave detection process and an object whose position has been identified by the image detection process are allowed to be regarded as the identical object, an object determined as identical that has been regarded as the identical object is set as an assistance target for which driving assistance of the vehicle is performed. On the other hand, even when an unidentified period in which a position of the object determined as identical is not allowed to be identified by the probe wave detection process occurs after the condition is satisfied, the object determined as identical is maintained as an assistance target in the unidentified period.

## Description

### BACKGROUND OF THE INVENTION

### (1) Field of the Invention

The present invention relates to a driving assistance device that assists in driving of a vehicle.

### (2) Description of Related Art

In the related art, as a safety device for ensuring safety during traveling or parking of a vehicle, there has been known a technique in which a detection sensor, such as an ultrasonic sensor, a millimeter wave radar sensor, or a LiDAR sensor, that detects a surrounding object (for example, a person, a bicycle, another vehicle, a wall, or the like) is disposed in the vehicle, and a warning is given to a driver or automatic control of the vehicle is performed based on a detection result of the detection sensor.

Such a detection sensor outputs a probe wave such as an ultrasonic wave, a millimeter wave, or an infrared wave, and measures a time until the output probe wave is reflected by an object and returns, and detects a distance to the object. In addition, when a plurality of detection sensors is disposed in the vehicle, a specific position of the object can be identified by triangulation using an indirect wave in addition to a direct wave. For example, JP 2022-148508 A discloses a technique in which, in a case where a position of an object estimated as a pedestrian by the image process on a captured image captured by an imaging device included in a vehicle substantially matches a position of the object identified by a detection sensor, it is determined that the pedestrian is present at the position identified by the detection sensor, and deceleration or braking is performed according to the determination.

### SUMMARY OF THE INVENTION

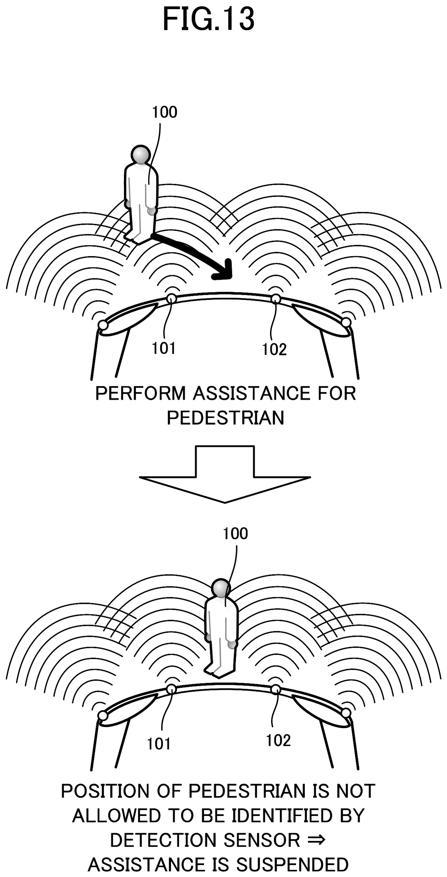

Here, in JP 2022-148508 A (paragraphs 0041 to 0043), when a position of an object estimated to be a pedestrian in the image process on a captured image matches a position of an object identified by a detection sensor, assistance for the pedestrian is performed. However, the position of the object can be identified by the detection sensor only when the object exists in a limited range because both the detection of the object using the direct wave and the detection of the object using the indirect wave can be performed and triangulation is required to be established. Therefore, for example, as illustrated in FIG. 13, when a pedestrian 100 to be a subject for whom the vehicle is decelerated or braked approaches a position very close to the vehicle between two detection sensors 101 and 102, triangulation is not established, and the position of the pedestrian 100 by the detection sensors is not allowed to be identified. Specifically, since the pedestrian wears a material the surface of which hardly reflects a probe wave, such as cloth, triangulation is hardly achieved. Then, when the position of the pedestrian 100 is not allowed to be identified by the detection sensor, the above condition that the position of the object matches cannot be satisfied, so that there is a problem that the assistance for the pedestrian 100 is suspended.

The present invention has been made to solve the above-described conventional problems, and an object of the present invention is to provide a driving assistance device capable of continuously maintaining an object as an assistance target even when a position of the object that has been an assistance target cannot be detected by a detection sensor on the way.

In order to achieve the above object, a driving assistance device according to the present invention acquires detection results by a plurality of detection sensors installed at different places with respect to a vehicle, each of the detection sensors transmitting a probe wave to surroundings of the vehicle, the detection sensors being in a positional relationship in which a reception wave including a reflected wave obtained by the probe wave being reflected by an object around the vehicle is allowed to be mutually received, performs a probe wave detection process of identifying a position of the object by triangulation using a first detection distance calculated by a detection sensor as a transmission source receiving a reflected wave of the probe wave as a direct wave and a second detection distance calculated by another detection sensor different from the transmission source receiving a reflected wave of the probe wave as an indirect wave, based on the acquired detection results by the detection sensors, performs an image detection process of identifying a position of an object around the vehicle as a result of an image recognition process on a captured image captured by an imaging device included in the vehicle, on condition that an object whose position is identified by the probe wave detection process and an object whose position is identified by the image detection process are allowed to be regarded as an identical object, sets an object determined as identical that is regarded as the identical object as an assistance target for which driving assistance of the vehicle is performed, and even when an unidentified period in which a position of the object determined as identical is not allowed to be identified by the probe wave detection process occurs after the condition is satisfied, maintains the object determined as identical as the assistance target in the unidentified period.

Note that "to set an object as an assistance target for which driving assistance of a vehicle is performed" includes, for example, issuing a warning to an object as an assistance target and performing vehicle control accompanying approach to an object as an assistance target.

According to the driving assistance device having the above configuration according to the present invention, on condition that the object whose position has been identified by the probe wave detection process and the object whose position has been identified by the image detection process are allowed to be regarded as the identical object, the object regarded as the identical object is set as an assistance target for which driving assistance of the vehicle is performed. Therefore, it is possible to provide assistance with high accuracy as compared with the related art. On the other hand, even when the position of the object that has been the assistance target cannot be detected by the detection sensor on the way, the object can be continuously maintained as the assistance target.

### BRIEF DESCRIPTION OF THE DRAWINGS

FIG. 1 is a schematic configuration diagram of a vehicle according to the present embodiment;
FIG. 2 is a diagram illustrating an arrangement example of an ultrasonic sensor at a front face of a vehicle;
FIG. 3 is a diagram illustrating an arrangement example of an ultrasonic sensor at a side face of a vehicle;
FIG. 4 is a diagram illustrating a method of identifying a specific position (relative position with respect to a vehicle) of an object using triangulation;
FIG. 5 is a diagram illustrating an area in which it is difficult to identify a position of an object by triangulation;
FIG. 6 is a diagram illustrating a case where triangulation is not established;
FIG. 7 is a block diagram illustrating a configuration of a driving assistance device according to the present embodiment;
FIG. 8 is a flowchart of a probe wave detection processing program according to the present embodiment;
FIG. 9 is a flowchart of an image detection processing program according to the present embodiment;
FIG. 10 is a flowchart of a driving assistance processing program according to the present embodiment;
FIG. 11 is a diagram illustrating identical object determination;
FIG. 12 is a diagram illustrating a case where assistance for an object is continued even after a position is not allowed to be identified by the probe wave detection process; and
FIG. 13 is a diagram illustrating problems of the technique in the related art.

### DETAILED DESCRIPTION OF PREFERRED EMBODIMENTS

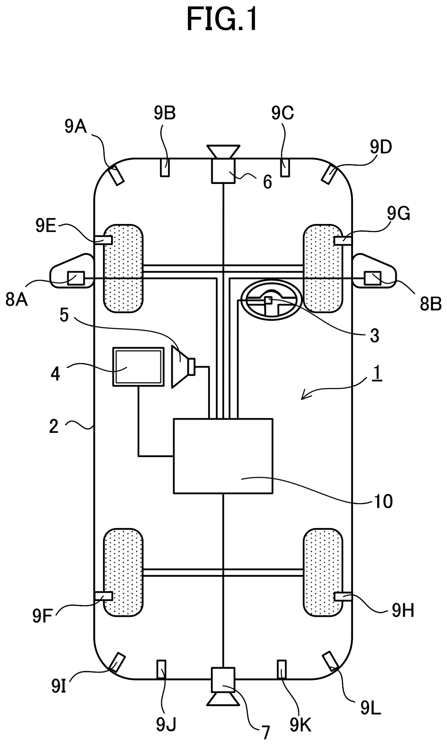

Hereinafter, a driving assistance device according to an embodiment of the present invention will be described in detail with reference to the drawings. First, a vehicle 2 equipped with a driving assistance device 1 according to the present embodiment will be described below. FIG. 1 is a schematic configuration diagram of a vehicle 2 according to the present embodiment.

Here, the vehicle 2 may be, for example, an automobile (internal combustion engine automobile) including an internal combustion engine (engine or the like) as a drive source, an automobile (electric vehicle, fuel cell vehicle, etc.) including an electric motor (motor or the like) as a drive source, or an automobile (hybrid automobile) including both of them as drive sources. In addition, the type of vehicle does not matter, the vehicle may be a normal vehicle, or may be a commercial large truck, a bus, a construction machine, or the like. In the following, a four-wheel vehicle is described, but a two-wheel or three-wheel vehicle may be described.

However, in addition to the manual driving travel in which the vehicle 2 travels based on the driving operation of the user, the vehicle 2 may be a vehicle that can perform the assisted travel by the automatic driving assistance in which the vehicle automatically travels without depending on the driving operation of the user. Alternatively, the vehicle may be configured to execute only the assisted travel by automatic driving assistance. On the other hand, the vehicle 2 is not necessarily limited to the vehicle capable of the assisted travel by the automatic driving assistance, and may be a vehicle capable of only travel by manual driving. However, even when the vehicle can only travel by manual driving, in a case where an object such as a pedestrian or another vehicle approaches the vehicle as described later, the vehicle is assumed to be capable of performing the warning or the deceleration control on the object.

In addition, in the case of a vehicle that can perform the assisted travel by the automatic driving assistance, for example, the assistance may be given only under a specific situation such as at the time of parking or at the time of exiting, may be given for all road sections, or may be given only when the vehicle is traveling in a specific road section (for example, an expressway in which a gate (it does not matter whether manned or unmanned, or pay or free) is provided at a boundary).

In addition, in the vehicle control in the automatic driving assistance, for example, a current position of the vehicle, a lane on which the vehicle travels, and a position of a surrounding obstacle are detected as needed, and vehicle control such as a steering wheel, a drive source, a brake, and the like is automatically performed so as to travel along the generated travel trajectory at a speed according to the similarly generated speed plan. Specifically, in a case where parking assistance is performed, vehicle control in which a parking space in which the vehicle is to be parked and a situation around the parking space are checked using a detection result of the sensor or the camera, a parking trajectory to the parking space is calculated, the vehicle is caused to enter the parking space along the calculated parking trajectory and parking is completed is automatically performed. However, only the steering operation may be automatically performed, and the drive source and the brake may be controlled based on the manual operation. Alternatively, only guidance of the parking space may be provided, and the user may manually perform a parking operation in the parking space.

Further, in the present embodiment, when an object such as a pedestrian or another vehicle approaches the vehicle, driving assistance such as the warning or the deceleration control is performed on the object regardless of whether the traveling is performed by the automatic driving assistance or the traveling is performed by the manual driving. Basically, the type of the object is not limited, and the driving assistance is performed even for a stationary object such as a utility pole, a wall, or a step in addition to a moving object such as a pedestrian, a bicycle, or another vehicle. Specifically, for a pedestrian, the accuracy of driving assistance is improved by making the identical object determination using both the probe wave detection process and the image detection process as described later.

For example, in a case where a warning is given, a warning sound may be output, or a landscape around the vehicle (which may be a real landscape or a virtual landscape of CG) may be displayed on an in-vehicle display, and a warning image indicating the presence of an object may be displayed in the landscape in a superimposed manner. On the other hand, when the deceleration control is performed, the brake is automatically operated when an object is detected within a distance set according to the current vehicle speed of the vehicle. When the automatic driving assistance is being executed, it is possible to perform deceleration control and suspend the automatic driving assistance to stop the vehicle.

As illustrated in FIG. 1, the vehicle 2 includes an operation unit 3 that receives an operation from an occupant, a liquid crystal display 4 that displays an image around the vehicle and other information related to driving assistance to the occupant, a speaker 5 that outputs audio guidance related to driving assistance, a front camera 6, a rear camera 7, and side cameras 8A and 8B for imaging the surroundings of the vehicle, ultrasonic sensors 9A to 9L, as a type of the detection sensor, that detect the obstacle around the vehicle, and a driving assistance electronic control unit (ECU) 10 that performs various types of arithmetic processing based on input information. The driving assistance device 1 includes the driving assistance ECU 10.

Hereinafter, each component included in the vehicle 2 will be described. First, the operation unit 3 is disposed, for example, on a front face of a steering wheel, and includes an operation button or the like to be operated when automatic driving assistance is started. By operating the operation unit 3, the user can switch between the manual driving travel in which the vehicle travels based on the driving operation by the user and the assisted travel by the automatic driving assistance in which the vehicle automatically travels without depending on the driving operation by the user. The operation unit 3 may include a touch panel provided on the front face of the liquid crystal display 4. Further, a microphone and a voice recognition device may be provided.

The liquid crystal display 4 is a type of the display device, is provided on an instrument panel of the vehicle 2, and displays, for example, a map image around the host vehicle, captured images captured by the respective cameras of the front camera 6, the rear camera 7, and the side cameras 8A and 8B, or a bird's eye image, an overhead view image, or the like around the vehicle generated by performing viewpoint conversion and synthesis process on the captured images. When an object such as a pedestrian or another vehicle approaches the vehicle, a warning image indicating the presence of the object is displayed. Note that the liquid crystal display 4 may be used for a navigation device.

In addition, the speaker 5 is provided at an instrument panel of the vehicle 2 to output a guide voice, a warning sound, and the like related to driving assistance. Specifically, when an object such as a pedestrian or another vehicle approaches the vehicle, a warning sound with respect to the object is output in a mode in which a direction in which the object is located can be known. Note that the speaker 5 may be used for a navigation device.

The front camera 6 is an imaging device including a camera including a solid-state imaging element such as a CCD, for example, and is installed, for example, above a front bumper of the vehicle 2 or on a back side of a room mirror with an optical axis direction facing forward in a travel direction of the vehicle.

The rear camera 7 is an imaging device that includes a camera similarly including a solid-state imaging element such as a CCD, and is attached, for example, to the vicinity of the upper center of a number plate attached to the rear of vehicle 2, and is installed with an optical axis direction facing the rear of the vehicle.

Further, the side cameras 8A and 8B are imaging devices each including a camera similarly including a solid-state imaging element such as a CCD, and are attached, for example, to left and right mirrors of the vehicle 2, and are installed with an optical axis direction facing in the side direction of the vehicle.

Then, the driving assistance ECU 10 detects an object (a section line, another vehicle, a pedestrian, a bicycle, a wall, a guard rail, and another structure) around the vehicle by performing the image recognition process on captured images captured by the respective cameras of the front camera 6, the rear camera 7, and the side cameras 8A and 8B. The detected object is used for automatic driving assistance, and in particular, in a case where a pedestrian is detected, the position is identified, and the detected object is used for the identical object determination (S13) described later. In addition, it is used to identify the position of an object as an assistance target under specific conditions. Further, captured images captured by the respective cameras of the front camera 6, the rear camera 7, and the side cameras 8A and 8B, or a bird's-eye view image and an overhead view image around the vehicle generated by performing the viewpoint conversion and synthesis process on the captured images are to be displayed on the liquid crystal display 4.

On the other hand, the ultrasonic sensors 9A to 9L are disposed at predetermined intervals at the front, rear, and side portions of the vehicle, transmit ultrasonic waves as probe waves to the surroundings of the vehicle 2, and receive reflected waves obtained by the transmitted probe waves being reflected by an object around the vehicle, thereby detecting the object reflecting the probe waves. Specifically, the sensor is a type of the distance measurement sensor capable of detecting the distance (measured distance value) to the object reflecting the probe wave by measuring the time from transmission to reception. In addition, the ultrasonic sensors 9A to 9L are configured to be capable of generating an output signal (including the distance to the detected object) corresponding to the reception result of the reception wave and outputting the generated output signal to the control unit. Examples of the object to be detected by the ultrasonic sensors 9A to 9L include a step in addition to obstacles that need to be avoided when the vehicle 2 travels, such as a person, a bicycle, another vehicle, and a wall. As the distance measurement sensor, a millimeter wave sensor or a radar sensor may be used instead of the ultrasonic sensor.

In addition, the installation position and the installation direction of each of the ultrasonic sensors 9A to 9L can be set as appropriate, but, in the present embodiment, in order to set all directions of the front, rear, left, and right sides of the vehicle 2 in the travel direction as the detection range of the object, for example, the ultrasonic sensors 9A to 9D are installed at the front face of the vehicle 2 toward the travel direction so that the transmission direction of the probe wave matches the front of the vehicle in the travel direction. The ultrasonic sensors 9E and 9F are installed leftward on the left side face of the vehicle 2 so that the transmission direction of the probe wave matches the left side of the vehicle with respect to the travel direction. In addition, the ultrasonic sensors 9G and 9H are installed at the right face of the vehicle 2 in the right direction so that the transmission direction of the probe wave matches the right side of the vehicle with respect to the travel direction. In addition, the ultrasonic sensors 9I to 9L are installed at the rear face of the vehicle 2 in a direction opposite to the travel direction so that the transmission direction of the probe wave is directed behind the vehicle. The heights of the ultrasonic sensors 9A to 9L from the ground surface are substantially the same.

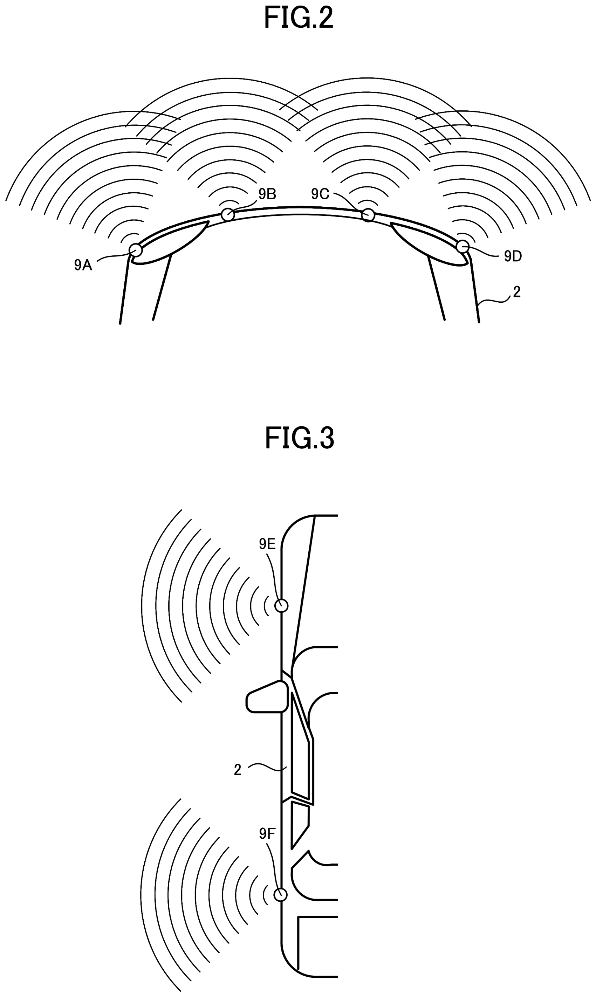

Specifically, when the ultrasonic sensors 9A to 9D will be described as an example, it is desirable that the ultrasonic sensors 9A to 9D be installed at different positions around the front bumper at the front face of the vehicle 2 or the front grille above the front bumper at equal intervals without being biased in the left-right direction as illustrated in FIG. 2, and be able to transmit the probe wave to a wider range in front of the vehicle (that is, the range in which the object is detectable is set to a wider range).

Specifically, as illustrated in FIG. 2, the ultrasonic sensor 9A is installed in a direction in which the transmission direction of the probe wave is inclined slightly leftward from the travel direction of the vehicle 2 near the left front direction of the vehicle 2 so as to transmit the probe wave in front of and left of the vehicle 2. In addition, the ultrasonic sensor 9B is installed at the slightly left side of the center line of the vehicle 2 with the transmission direction of the probe wave facing in the travel direction of the vehicle so as to transmit the probe wave in particularly left front of the vehicle 2. In addition, the ultrasonic sensor 9C is installed at the slightly right side of the center line of the vehicle 2 with the transmission direction of the probe wave facing in the travel direction of the vehicle so as to transmit the probe wave in particularly right front of the vehicle 2. In addition, the ultrasonic sensor 9D is installed in a direction in which the transmission direction of the probe wave is inclined slightly rightward from the travel direction of the vehicle 2 near the right front direction of the vehicle 2 so as to transmit the probe wave in right front of the vehicle 2. In addition, the ultrasonic sensor 9A and the ultrasonic sensor 9D are disposed symmetrically with respect to the vehicle center line in plan view and the ultrasonic sensor 9B and the ultrasonic sensor 9C are disposed symmetrically with respect to the vehicle center line in plan view. Although not illustrated, the same applies to the ultrasonic sensors 9I to 9L on the rear face of the vehicle 2, each of which is symmetrically arranged about the vehicle centerline.

On the other hand, as illustrated in FIG. 3, the side ultrasonic sensor 9E and the side ultrasonic sensor 9F are installed so as to transmit probe waves in a direction intersecting the travel direction of the vehicle 2 by 90 degrees. Since the number of sensors installed in the range of the lateral side is smaller than that in the range of each of the front side and the rear side of the vehicle described above, there are areas in which the object cannot be directly detected by the ultrasonic sensors 9E and 9F, but, for these areas, the presence or absence of the object and the position of the object can be estimated from the detection history of the object by the ultrasonic sensors 9A to 9L. Although not illustrated, the same applies to the ultrasonic sensor 9G and the ultrasonic sensor 9H on the right face of the vehicle 2, each of which is symmetrical in the lateral direction.

In the present embodiment, among the ultrasonic sensors 9A to 9L, in particular, the ultrasonic sensors 9A to 9D on the front face of the vehicle 2 and the ultrasonic sensors 9I to 9L on the rear face of the vehicle 2 are installed at positions where reflected waves as indirect waves can be received between adjacent sensors. Therefore, by receiving a direct wave and an indirect wave as reception waves, it is possible to identify not only a distance to the object but also a specific position (relative position with respect to the vehicle) of the object using triangulation. Since the side ultrasonic sensors 9E to 9H are installed to be away from each other, indirect waves are not allowed to be received, but since the vehicle moves, a specific position (relative position with respect to the vehicle) of the object is allowed to be identified by triangulation using the measurement distance at the previous position, the measurement distance at the current position, and the movement distance between the previous position and the current position.

Hereinafter, in particular, the ultrasonic sensors 9A to 9D, as an example, disposed at the front face of the vehicle 2 will be described in more detail, including the detection mode of the object.

Here, among the ultrasonic sensors 9A to 9D, the ultrasonic sensor 9A and the ultrasonic sensor 9B are in a positional relationship in which at least reception waves can be mutually received. That is, the ultrasonic sensor 9B is in a positional relationship in which the probe wave transmitted by the ultrasonic sensor 9A can be received as an indirect wave. Similarly, the ultrasonic sensor 9A is in a positional relationship in which the probe wave transmitted by the ultrasonic sensor 9B can be received as an indirect wave. In addition, the ultrasonic sensor 9B and the ultrasonic sensor 9C are in a positional relationship in which the reception waves can be mutually received. That is, the ultrasonic sensor 9C is in a positional relationship in which the probe wave transmitted by the ultrasonic sensor 9B can be received as an indirect wave. Similarly, the ultrasonic sensor 9B is in a positional relationship in which the probe wave transmitted by the ultrasonic sensor 9C can be received as an indirect wave. Furthermore, the ultrasonic sensor 9C and the ultrasonic sensor 9D are in a positional relationship in which the reception waves can be mutually received. That is, the ultrasonic sensor 9D is in a positional relationship in which the probe wave transmitted by the ultrasonic sensor 9C can be received as an indirect wave. Similarly, the ultrasonic sensor 9C is in a positional relationship in which the probe wave transmitted by the ultrasonic sensor 9D can be received as an indirect wave.

On the other hand, with respect to a combination of ultrasonic sensors other than the above, basically, ultrasonic sensors are in a positional relationship in which reception waves cannot be mutually received, and for example, there is a positional relationship in which the ultrasonic sensor 9C and the ultrasonic sensor 9D cannot receive the probe wave transmitted by the ultrasonic sensor 9A as an indirect wave. In addition, the ultrasonic sensor 9D is in a position relationship in which the probe wave transmitted by the ultrasonic sensor 9B cannot be received as an indirect wave. In addition, the ultrasonic sensor 9A is in a position relationship in which the probe wave transmitted by the ultrasonic sensor 9C cannot be received as an indirect wave. In addition, the ultrasonic sensor 9A and the ultrasonic sensor 9B are in a position relationship in which the probe wave transmitted by the ultrasonic sensor 9D cannot be received as an indirect wave.

Note that the "reception wave can be received" described above means that the reception wave can be received to such an extent that the distance to the object can be effectively detected. On the other hand, the "reception wave cannot be received" includes receiving a wave with a weak reception strength to such an extent that the distance to the object cannot be effectively detected in addition to receiving no reception wave.

Then, in the present embodiment, the ultrasonic sensors 9A to 9D can identify not only the distance to the object but also a specific position (relative position with respect to the vehicle) of the object by receiving a direct wave and an indirect wave as reception waves. The "direct wave" and the "indirect wave" are defined as follows. For example, among the reception waves received by the ultrasonic sensor 9A, a reception wave resulting from a reflected wave of a probe wave from the object, the probe wave being transmitted from the ultrasonic sensor 9A, the reflected wave being reflected, is referred to as a "direct wave". The direct wave is a reception wave when the ultrasonic sensor 9A receives a reflected wave of a probe wave from the object, the probe wave being transmitted from the ultrasonic sensor 9A, as a reception wave. That is, the direct wave is the reception wave when the ultrasonic sensor that has transmitted the probe wave and the ultrasonic sensor that has received a reflected wave of a probe wave from the object as the reception wave are identical. On the other hand, among the reception waves received by the ultrasonic sensor 9A, a reception wave resulting from a reflected wave of a probe wave from the object, the probe wave being transmitted from an ultrasonic sensor other than the ultrasonic sensor 9A (the ultrasonic sensor 9B in the present embodiment), is referred to as an "indirect wave". The indirect wave is a reception wave when the ultrasonic sensor 9A receives a reflected wave of a probe wave from the object, the probe wave being transmitted from the ultrasonic sensor 9B as a reception wave. That is, the indirect wave is a reception wave when the ultrasonic sensor that has transmitted the probe wave is different from the ultrasonic sensor that has received the reflected wave of the probe wave from the object as a reception wave.

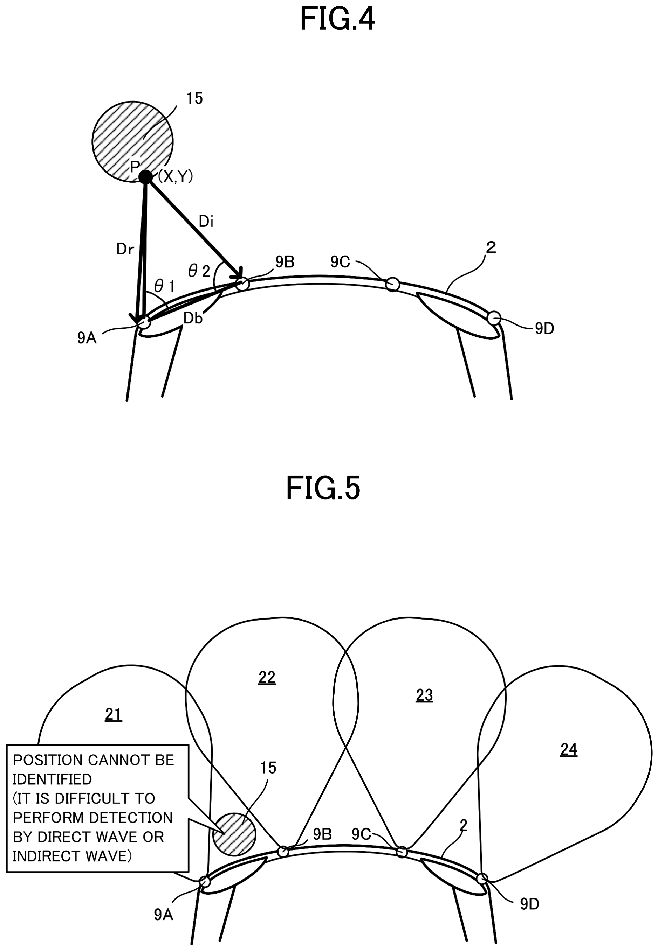

Then, a method of identifying a specific position (relative position with respect to the vehicle) of an object 15 when the object 15 is present in front of the vehicle as illustrated in FIG. 4 will be described by exemplifying, in particular, a case where the position P(X, Y) of the object 15 is identified by the probe wave transmitted from the ultrasonic sensor 9A. First, a distance Dr from the ultrasonic sensor 9A to a position P is measured by receiving a direct wave which is a reflected wave reflected by the object 15, the direct wave being transmitted by the ultrasonic sensor 9A. In addition, the ultrasonic sensor 9B receives, as an indirect wave, a reflected wave obtained by the probe wave transmitted from the ultrasonic sensor 9A being reflected by the object, whereby the sum of the distance Dr from the ultrasonic sensor 9A to the position P and the distance Di from the ultrasonic sensor 9B to the position P is measured. In addition, a distance Db between the ultrasonic sensor 9A and the ultrasonic sensor 9B is a fixed value for each vehicle, and can be acquired by being input to the device in advance. As a result, angles θ1 and θ2 therebetween is allowed to be calculated from the lengths of the three sides Dr, Di, and Db, and specific position coordinates (X, Y (relative position with respect to vehicle) ) of the position P of the object 15 can also be identified using triangulation. In the above example, the position P(X, Y) of the object 15 is identified by the probe wave transmitted from the ultrasonic sensor 9A. The position P(X, Y) of the object 15 can be similarly identified by the probe wave transmitted from another ultrasonic sensor (for example, the ultrasonic sensor 9B) at the position where the probe wave reaches the object 15.

As illustrated in FIG. 4, it is possible to detect a specific position of an object in detecting the object using triangulation, but the detection accuracy generally decreases as the distance from the ultrasonic sensors 9A to 9L increases. In addition, since the pedestrian wears a material the surface of which hardly reflects a probe wave, such as cloth, a detection error is likely to occur. Therefore, for a pedestrian, who is an object to be particularly noted for the vehicle, in order to provide highly accurate assistance, in addition to the ultrasonic sensors 9A to 9L detecting the object, the image recognition result for the captured image captured by a camera included in the vehicle is combined. Specifically, in parallel with the process (hereinafter, referred to as a probe wave detection process) of identifying the position of the object by the triangulation described above (the execution interval may be different), the process (hereinafter, referred to as an image detection process) of identifying the position of the object by performing the image recognition process on the captured image captured by each of the front camera 6, the rear camera 7, and the side cameras 8A and 8B is performed. Then, in the driving assistance device 1 of the present embodiment, on condition that an object whose position has been identified by the probe wave detection process and an object whose position has been identified by the image detection process are allowed to be regarded as an identical object, the object regarded as the identical object is recognized as an assistance target for which driving assistance of the vehicle is performed. Note that the determination as to whether the objects are the identical object will be hereinafter referred to as an identical object determination, and the object for which the identical object determination is established will be hereinafter referred to as an object determined as identical.

In the present embodiment, the object is detected by the ultrasonic sensors 9A to 9L alone as in the conventional manner with respect to the object other than the pedestrian. However, the identical object determination may be made with respect to the object other than the pedestrian, and on condition that an object whose position is identified by the probe wave detection process and an object whose position is identified by the image detection process are allowed to be regarded as an identical object, the target regarded as the identical object may be recognized as the assistance target for which driving assistance of the vehicle is performed.

On the other hand, as illustrated in FIGS. 2 and 3, in the present embodiment, a plurality of ultrasonic sensors is disposed at the vehicle, but the range in which the probe wave can be transmitted is limited. Specifically, as illustrated in FIG. 5, each of the detection ranges 21 to 24 in which the ultrasonic sensors 9A to 9D can detect the obstacle is a substantially elongated elliptical range. Although not illustrated, the same applies to the other ultrasonic sensors 9E to 9L. Therefore, as illustrated in FIG. 5, the object 15 located at the position that is far away from the ultrasonic sensors 9A to 9L or in the area between the adjacent ultrasonic sensors even when the area is close to the ultrasonic sensor 9A cannot be detected by the direct wave or the indirect wave in many cases. In an area where it is difficult to perform detection using the direct wave or the indirect wave, the object 15 cannot be detected using triangulation, and the position of the object 15 is not allowed to be identified in many cases.

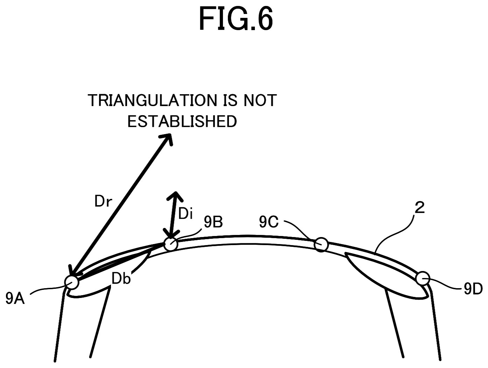

Furthermore, in detection of an object using triangulation, the position of the object may not be detected not only in a case where a direct wave or an indirect wave cannot be received, but also in a case where triangulation cannot be calculated even if a direct wave and an indirect wave are received. For example, as illustrated in FIG. 6, in a case where the difference between the distance Dr and the distance Di is large, there is a case where the triangulation points may not be connected and not be established. In a case where the vicinity of the corner of the object or the surface in the depth direction is detected, the above-described difference in distance tends to easily occur.

In the driving assistance device 1 of the present embodiment, as described above, in the assistance for the pedestrian, the accuracy of the assistance can be improved by making the identical object determination, as compared with the case where the object is detected by the ultrasonic sensors 9A to 9L alone. However, in a case where the object determined as identical moves to the position illustrated in FIG. 5 in a state where the identical object determination is established, an unidentified period in which a position of the object determined as identical is not allowed to be identified by the probe wave detection process occurs. When the object determined as identical is excluded from the assistance target in principle during this unidentified period, the assistance for the object determined as identical cannot be performed. Specifically, in a state where the assistance for the object determined as identical is being provided, the assistance is suspended halfway. However, it is necessary to prevent the state as much as possible in which the assistance is not provided in a state where the pedestrian is located close to the vehicle as illustrated in FIG. 5. Therefore, in the present embodiment, as will be described later, the object determined as identical is regarded as the assistance target even in the unidentified period. Details will be described later.

On the other hand, the driving assistance ECU 10 is an electronic control unit that performs various processes related to automatic driving assistance. The probe wave detection process and the image detection process described above are performed at predetermined processing intervals, and the identical object determination is made particularly for pedestrians. When an object such as a pedestrian or another vehicle recognized as an assistance target approaches the vehicle, the warning or the deceleration control is performed for the object. On the other hand, when automatic driving assistance is performed, for example, a current position of the vehicle, a lane on which the vehicle travels, and a position of a surrounding obstacle are detected as needed, and vehicle control such as steering, a drive source, and a brake is performed so that the vehicle travels along the generated travel trajectory at a speed according to the similarly generated speed plan. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as CAN. Further, the ECU 10 is connected to various sensors such as a vehicle speed sensor, an acceleration sensor, a gyro sensor, a steering sensor, and a shift position sensor, which are mounted on the vehicle 2, a navigation device which is an in-vehicle device, and the like. A detailed configuration of the driving assistance ECU 10 will be described later.

In addition, the vehicle 2 includes basic components as the vehicle 2 in addition to the components illustrated in FIG. 1, but only a configuration related to detection of an object and assistance for the detected object and control related to the configuration will be described.

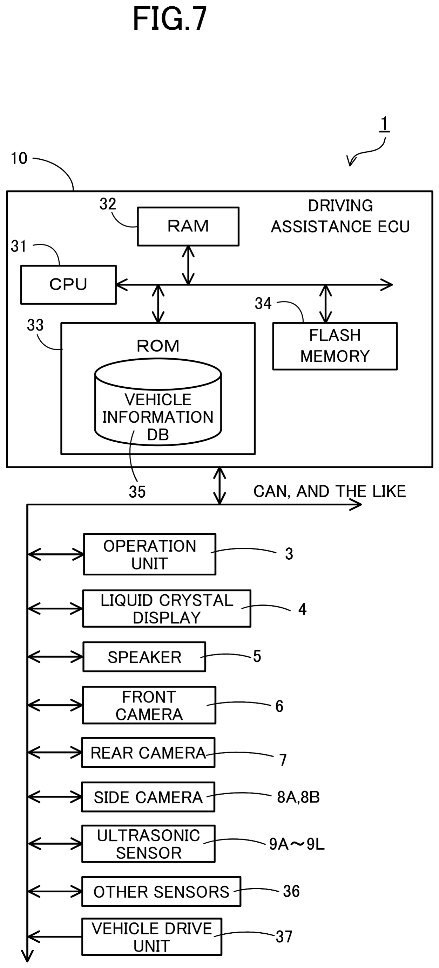

Next, details of the driving assistance ECU 10, in particular, in the driving assistance device 1 included in the above-described vehicle 2 will be described. FIG. 7 is a block diagram illustrating a configuration of the driving assistance device 1 according to the present embodiment.

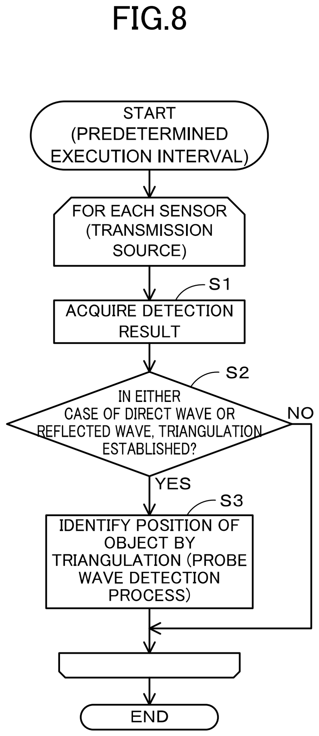

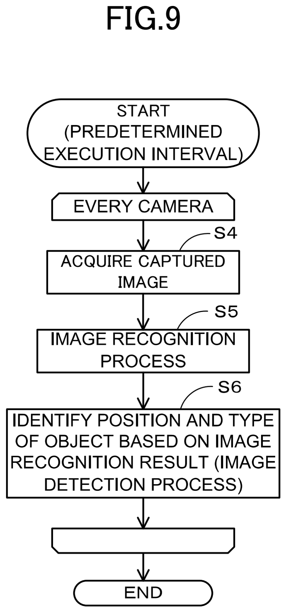

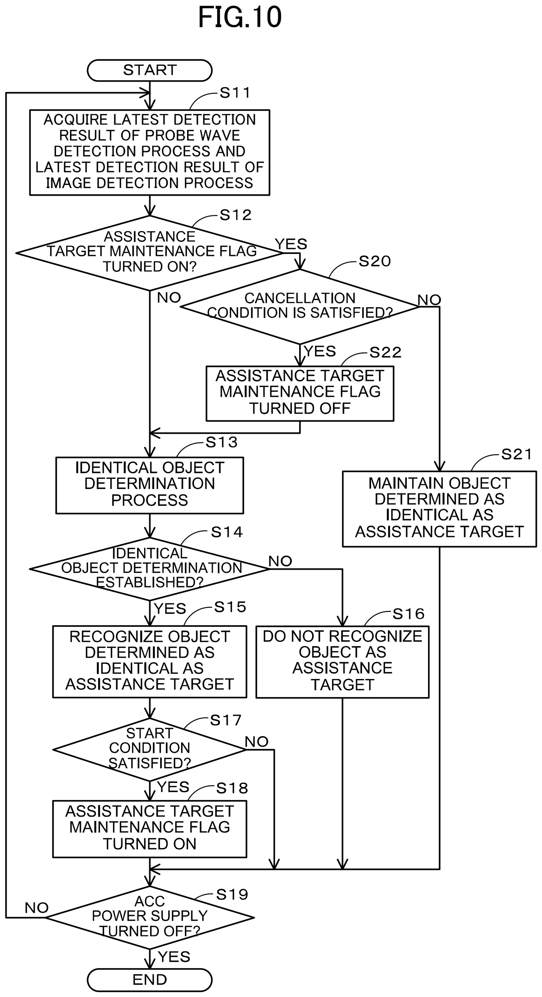

As illustrated in FIG. 7, the driving assistance ECU (electronic control unit) 10 is an electronic control unit that performs overall control of the driving assistance device 1, and includes a CPU 31 as an arithmetic device and a control device, and internal storage devices such as a RAM 32 that is used as a working memory when the CPU 31 performs various kinds of arithmetic processing and that stores a history of detection coordinates when an object is detected, a ROM 33 in which a probe wave detection process program (see FIG. 8), an image detection processing program (see FIG. 9), a driving assistance processing program (see FIG. 10), and the like that are described later are recorded, a flash memory 34 that stores a program read from the ROM 33, and the like, in addition to a program for control. The driving assistance ECU 10 executes various functions as a processing algorithm. For example, the functions include a function of acquiring detection results by the ultrasonic sensors 9A to 9L, a function of performing a probe wave detection process of identifying a position of an object by triangulation using a first detection distance calculated by a detection sensor as a transmission source receiving a reflected wave of a probe wave as a direct wave and a second detection distance calculated by another detection sensor different from the transmission source receiving a reflected wave of a probe wave as an indirect wave, based on the acquired detection results by the ultrasonic sensors 9A to 9L, a function of performing an image detection process of identifying a position of an object around the vehicle as a result of the image recognition process on captured images captured by the front camera 6, the rear camera 7, and the side cameras 8A and 8B included in the vehicle, on condition that an object whose position has been identified by the probe wave detection process and an object whose position has been identified by the image detection process are allowed to be regarded as an identical object, a function of recognizing the object determined as identical that has been regarded as the identical object as an assistance target for which driving assistance of the vehicle is performed, and even if an unidentified period in which a position of the object determined as identical is not allowed to be identified by the probe wave detection process occurs after the condition for the identical determination is satisfied, a function of maintaining the object determined as identical as an assistance target in the unidentified period, and the like.

The driving assistance ECU 10 is connected to various sensors 36 for detecting the behavior of the vehicle, such as a vehicle speed sensor, a wheel speed sensor, an acceleration sensor, a gyro sensor, a steering sensor, and a shift position sensor, and respective drive units 37 of the vehicle, such as a steering, a brake, an accelerator, and a transmission. The driving assistance ECU performs deceleration control and automatic driving assistance of the vehicle 2 by controlling respective drive units 37 while detecting the current behavior of the vehicle based on the detection results by these sensors 36. As specific details of the deceleration control, for example, when it is determined that the object is located within a distance (basically, the higher the speed of the vehicle, the longer the distance, and the lower the speed, the shorter the distance) set based on the current speed of the vehicle, the brake is automatically operated to decelerate the vehicle. Specifically, when the automatic driving assistance is being executed, the deceleration control is performed, and the automatic driving assistance is suspended to stop the vehicle. The deceleration control includes not only active deceleration control by operating a brake but also control for suppressing acceleration. However, the deceleration control includes only an instruction to the occupant, and the brake control may be performed based on a manual operation by the occupant.

The ROM 33 includes a vehicle information DB 35, and the vehicle information DB 35 stores various types of information about the vehicle 2. For example, installation positions (height from ground surface, position in horizontal direction) and detection axes (optical axes for cameras) of the cameras and the ultrasonic sensors 9A to 9L installed in the vehicle 2, a total length, a vehicle width, a wheel base, a minimum turning radius, and the like are stored. These pieces of information are input in advance by an occupant or a person of the vehicle manufacturer.

Next, a probe wave detection processing program executed by the driving assistance ECU 10 in the driving assistance device 1 having the above configuration will be described with reference to FIG. 8. FIG. 8 is a flowchart of a probe wave detection processing program according to the present embodiment. Here, the probe wave detection processing program is a program that is repeatedly executed at a predetermined execution interval (for example, 200 ms) after the ACC power supply of the vehicle 2 is turned ON, and detects an object around the vehicle 2 using the detection results by the ultrasonic sensors 9A to 9L. Programs illustrated in flowcharts in FIGS. 8 to 10 below are stored in the RAM 32 or the ROM 33 included in the driving assistance device 1 and executed by the CPU 31.

The process of the following steps (hereinafter, abbreviated as S) S1 to S3 is a process of identifying the position of the object using the detection results by the ultrasonic sensors 9A to 9L included in the vehicle 2, and is performed for all the ultrasonic sensors 9A to 9L included in the vehicle 2. For example, a case where the position of the object is identified by the probe wave transmitted from the ultrasonic sensor 9A will be described below as an example. The ultrasonic sensors 9A to 9L constantly transmit probe waves at regular time intervals, and the following process in and after S1 is repeatedly executed until the end condition (for example, ACC is turned off) is satisfied.

First, in S1, when the reflected wave of the probe wave transmitted by the ultrasonic sensor 9A (first sensor) is received as a direct wave, the CPU 31 measures the distance Dr (first detection distance) from the ultrasonic sensor 9A to the position P illustrated in FIG. 4 based on the time from the transmission of the probe wave to the reception of the direct wave. When the ultrasonic sensor 9B (second sensor) receives the reflected wave of the probe wave transmitted from the ultrasonic sensor 9A as an indirect wave, the CPU 31 measures the sum (second detection distance) of the distance Dr from the ultrasonic sensor 9A to the position P and the distance Di from the ultrasonic sensor 9B to the position P illustrated in FIG. 4 based on the time from the transmission of the probe wave to the reception of the reflected wave. Note that in a case where neither the direct wave nor the reflected wave is received, the process in and after S2 is not performed.

Next, in S2, the CPU 31 determines whether triangulation has been established. Here, the detection of the object using triangulation has already been described with reference to FIG. 4, but the detection is performed using the distance Dr from the ultrasonic sensor 9A to the position P, the sum of the distance Dr from the ultrasonic sensor 9A to the position P and the distance Di from the ultrasonic sensor 9B to the position P, and the distance Db between the ultrasonic sensor 9A and the ultrasonic sensor 9B. Here, when either the direct wave or the indirect wave cannot be detected, the triangulation is not established. Even when both the direct wave and the indirect wave are detected, as illustrated in FIG. 6, in a case where the difference between the distance Dr and the distance Di is large, the triangulation points may not be connected and not be established.

When it is determined that the reflected wave of the probe wave transmitted by the ultrasonic sensor 9A is received as a direct wave, the reflected wave of the probe wave transmitted from the ultrasonic sensor 9A is received as an indirect wave by the ultrasonic sensor 9B, and triangulation is established between the distance Dr and the distance Di (S2: YES), the process proceeds to S3. On the other hand, when it is determined that at least one of the direct wave and the indirect wave cannot be received, or triangulation is not established between the distance Dr and the distance Di even when the at least one of the direct wave and the indirect wave can be received (S2: NO), the process ends without identifying the position of the object. However, when at least the direct wave can be received, the distance to the object can be identified although the position of the object is not allowed to be identified, so that the assistance using the distance to the object can be performed.

In S3, the CPU 31 identifies the specific position coordinates (X, Y (relative position with respect to vehicle)) of the position P of the object using the established triangulation result. Note that the identified position coordinates are stored in the flash memory 34 or the like. Specifically, in the case of the object having a width, the range in which the object is located is identified by the coordinate sequence. In addition, in a case where a plurality of objects is detected, the position coordinates are identified for the plurality of detected objects. Note that details of triangulation have already been described with reference to FIG. 4, and thus will be omitted.

Next, the process of S1 to S3 is performed on the probe wave transmitted from the ultrasonic sensor 9B included in the vehicle 2, and the position of the object is identified. The same applies to the ultrasonic sensors 9C to 9L.

However, since the ultrasonic sensors 9E to 9H disposed at the side face of the vehicle 2 cannot detect the object by the indirect wave, only the distance to the object by the direct wave is measured. When measured distance values of the ultrasonic sensors 9E to 9H are continuously acquired during the movement of the vehicle 2, the position of the object is allowed to be calculated by triangulation using the measured distance value of the previous position, the measured distance value of the current position, and the movement distance therebetween. As for the ultrasonic sensor 9B near the center of the vehicle, the indirect wave can be received by the ultrasonic sensor 9A and the ultrasonic sensor 9C located on the left and right. Therefore, in S3, the position of the object is identified by triangulation based on the indirect wave received by the ultrasonic sensor 9A, and the position of the object is identified by triangulation based on the indirect wave received by the ultrasonic sensor 9C. The same applies to the ultrasonic sensors 9C, 9J, and 9K.

Next, an image detection processing program executed by the driving assistance ECU 10 in the driving assistance device 1 will be described with reference to FIG. 9. FIG. 9 is a flowchart of an image detection processing program according to the present embodiment. Here, the image detection processing program is a program that is repeatedly executed at a predetermined execution interval (for example, 100 ms) after the accessory power supply (ACC power supply) of the vehicle 2 is turned ON, and detects an object around the vehicle 2 using captured images captured by the front camera 6, the rear camera 7, and the side cameras 8A and 8B. The probe wave detection processing program of FIG. 8 and the image detection processing program of FIG. 9 described above are independently executed in parallel. In the present embodiment, the execution intervals of the probe wave detection processing program and the image detection processing program are different from each other, but the execution intervals may be the same.

The following process of S4 to S6 is a process of identifying the position of the object using the captured images captured by the front camera 6, the rear camera 7, and the side cameras 8A and 8B included in the vehicle 2, and is performed for all the front camera 6, the rear camera 7, and the side cameras 8A and 8B included in the vehicle 2. For example, a case where the position of the object is identified based on the captured image captured by the front camera 6 will be described below as an example. Note that the front camera 6, the rear camera 7, and the side cameras 8A and 8B constantly capture images of the surroundings of the vehicle at a predetermined frame rate, and the following process in and after S4 is repeatedly executed until the end condition (for example, ACC is turned off) is satisfied.

First, in S4, the CPU 31 acquires a real-time captured image captured by the front camera 6. Note that the front camera 6 has an imaging range in front of the vehicle in the travel direction, and images the current situation in front of the vehicle in the travel direction.

Next, in S5, the CPU 31 performs the image recognition process on the captured image acquired in S4 to detect the object included in the captured image. Note that the type of the object to be detected is not particularly limited, and may include a stationary object such as a utility pole, a wall, or a step in addition to a moving object such as a pedestrian, a bicycle, or another vehicle. On the other hand, only a specific type of object such as a pedestrian may be set as the detection target.

As the process of detecting the object in S5, for example, it is possible to detect a boundary line between the road surface and the object by performing luminance correction on the road surface and the object based on a luminance difference, and then performing the binarization process of separating the object from the image, the geometric process of correcting distortion, the smoothing process of removing noise of the image, and the like. Furthermore, detection may be performed using the known template matching process, the known feature point detection process, or the like. Furthermore, the image recognition process on the captured image is not limited to the above example, and may be performed using, for example, machine learning.

Thereafter, in S6, the CPU 31 identifies the specific position coordinates (X, Y (relative position with respect to vehicle)) of the position P of the object using the result of the image recognition process in S5. In a case where a plurality of objects is detected, the position coordinates are identified for the plurality of detected objects. Basically, since the distortion of the image is less near the road surface, coordinates of a contact point (a foot in the case of a person) between the detected object and the road surface are identified. In addition, the type (for example, a pedestrian, another vehicle, a bicycle, a utility pole, or the like) of the object detected based on the result of the image recognition processing is identified. Note that the identified position coordinates and the type of the object are stored in the flash memory 34 or the like.

The process of S4 to S6 is performed on the captured images captured by the another rear camera 7 and the side cameras 8A and 8B included in the vehicle 2 to identify the position of the object.

Next, a driving assistance processing program executed by the driving assistance ECU 10 in the driving assistance device 1 will be described with reference to FIG. 10. FIG. 10 is a flowchart of a driving assistance processing program according to the present embodiment. Here, the driving assistance processing program is a program that is executed after the accessory power supply (ACC) of the vehicle 2 is turned ON, and performs various kinds of assistance for the detected object using the detection result of the probe wave detection processing program (FIG. 8) and the image detection processing program (FIG. 9) described above.

Here, in the following description, an example will be described in which a pedestrian is present as an object around the vehicle, and various kinds of assistance are provided for the detected pedestrian using the detection result of the probe wave detection processing program (FIG. 8) and the image detection processing program (FIG. 9) described above. Note that a pedestrian does not necessarily refer to a person who is walking, and a person who is stopping or running is basically regarded as a pedestrian. In addition, a person in a wheelchair or a person in a bicycle may be included in the pedestrian. However, basically, the type of the object is not limited, and the following driving assistance processing program can be executed, and the similar process can be executed for a stationary object such as a utility pole, a wall, or a step in addition to a moving object such as a bicycle or another vehicle in addition to a pedestrian.

First, in S11, the CPU 31 acquires the latest detection result of the probe wave detection processing program (FIG. 8) and the image detection processing program (FIG. 9) described above. Specifically, the position coordinates of an object around the host vehicle detected using the ultrasonic sensors 9A to 9L are acquired as a detection result of the probe wave detection processing program, and the position coordinates and a type of the object around the host vehicle detected from captured images of the front camera 6, the rear camera 7, and the side cameras 8A and 8B are acquired as a detection result of the image detection processing program.

Note that the following process in and after S12 is performed for each object whose position coordinates are acquired in S11. Therefore, in a case where the position coordinates of the plurality of objects have been acquired, the process in and after S12 is performed on the plurality of objects.

Subsequently, in S12, the CPU 31 determines whether an assistance target maintenance flag is turned ON. Here, the assistance target maintenance flag is stored in, for example, the RAM 32 or the like, and is turned ON when a predetermined start condition is satisfied as described later (S18). Even when an unidentified period in which a position of the object determined as identical is not allowed to be identified by the probe wave detection process occurs in the state of being turned ON as described later, the process of maintaining the object determined as identical as an assistance target in the unidentified period is performed. Details will be described later. In the initial state, the assistance target maintenance flag is turned OFF.

When it is determined that the assistance target maintenance flag is turned ON (S12: YES), the process proceeds to S20. On the other hand, when it is determined that the assistance target maintenance flag is turned OFF (S12: NO), the process proceeds to S13.

In step S13, the CPU 31 performs the identical object determination process of determining whether the object whose position is identified by the probe wave detection process and the object whose position is identified by the image detection process are allowed to be regarded as the identical object.

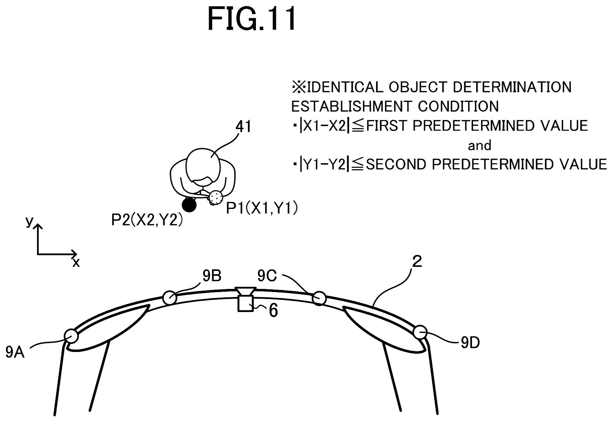

Hereinafter, the identical object determination process in the above-described S13 will be described with reference to FIG. 11.

For example, in the example illustrated in FIG. 11, it is assumed that the position coordinates of a pedestrian 41 who is an object identified by the probe wave detection process are P1(X1, Y1), and the position coordinates of the pedestrian who is an object identified by the image detection process are P2(X2, Y2). When the difference between X1 and X2 is within the first predetermined value and the difference between Y1 and Y2 is within the second predetermined value, it is determined that the object whose position is identified by the probe wave detection process and the object whose position is identified by the image detection process are allowed to be regarded as the identical object (the identical object determination is established). Note that the first predetermined value and the second predetermined value can be set as appropriate, and the first predetermined value and the second predetermined value may be different from each other or may be the same value. The first predetermined value and the second predetermined value can be set according to the performance of the sensor or the camera.

On the other hand, when the difference between X1 and X2 is larger than the first predetermined value or the difference between Y1 and Y2 is larger than the second predetermined value, it is determined that the object whose position is identified by the probe wave detection process and the object whose position is identified by the image detection process are not the identical object (the identical object determination is not established). In this case, for example, it can be assumed that different objects are detected in the probe wave detection process and the image detection process.

When the position of the object is not allowed to be identified in at least one of the probe wave detection process and the image detection process, for example, when triangulation is not established and the position of the object cannot be detected by the probe wave detection process, and the position of the object can be identified only by the image detection process, the identical object determination is not established.

When the identical object determination process in S13 is established, that is, when the object whose position is identified by the probe wave detection process and the object whose position is identified by the image detection process are allowed to be regarded as the identical object (S14: YES), the process proceeds to S15. On the other hand, when the identical object determination process in S13 is not established, that is, when the object whose position is identified by the probe wave detection process and the object whose position is identified by the image detection process are not allowed to be regarded as the identical object (S14: NO), the process proceeds to S16.

In S15, the CPU 31 recognizes the object determined as identical, which is an object for which the identical object determination has been established, as an assistance target for which driving assistance of the vehicle is performed. The position of the object determined as identical as the assistance target is identified using at least one of the position coordinates identified by the probe wave detection process and the position coordinates identified by the image detection process. Then, the following warning or deceleration control is performed based on the identified position coordinates of the object determined as identical.

When the object determined as identical recognized as the assistance target subsequently approaches the vehicle within a predetermined distance, the warning or the deceleration control is performed on the approaching object determined as identical. Specifically, after the identical object determination is established, when the positions of the object determined as identical can be identified by both the image detection process and the probe wave detection process, the CPU 31 continuously calculates the distance to each detection position with respect to the host vehicle, and performs the warning or the deceleration control when either one position approaches within a predetermined distance. When the assistance target is maintained in the unidentified period in which the position cannot be detected by the probe wave detection process, the above process is continued based on the position detected by the image detection process. Note that the predetermined distance varies depending on the current speed of the vehicle, and the higher the vehicle speed of the vehicle is, the longer the distance is set. For example, the distance is 50 cm at a vehicle speed of 5 km/h and 200 cm at a vehicle speed of 10 km/h.

For example, in a case where a warning is given, a warning sound may be output, or a landscape around the vehicle (which may be a real landscape or a virtual landscape of CG) may be displayed on an in-vehicle display, and a warning image indicating the presence of an object may be displayed in the landscape in a superimposed manner. On the other hand, when the deceleration control is performed, the brake is automatically operated. Specifically, when the automatic driving assistance is being executed, it is possible to perform deceleration control and suspend the automatic driving assistance to stop the vehicle.

Here, the warning or the deceleration control for the object determined as identical are performed only in a state where the object determined as identical is recognized as an assistance target. That is, the driving assistance processing program illustrated in FIG. 10 is repeatedly executed while the ACC power supply of the vehicle is turned on, and is repeatedly executed at a predetermined processing interval (for example, 200 ms) also in the identical object determination process in S13. Therefore, there is a case where the identical object determination is changed from the established state to the non-established state in S14 while the warning or the deceleration control is being performed, and in this case, the warning or the deceleration control is suspended at the time when the identical object determination is not established. However, while the assistance target maintenance flag to be described later is turned ON, the object determined as identical is continuously maintained as the assistance target even in a situation where the identical object determination is exceptionally not established.

On the other hand, in S16, the CPU 31 does not recognize the object detected by the probe wave detection process or the image detection process as an assistance target for which driving assistance of the vehicle is performed. Therefore, the warning or the deceleration control is not performed.

Subsequently, in S17, the CPU 31 determines whether a start condition for continuously recognizing the object determined as identical as an assistance target of driving assistance of the vehicle is satisfied. Here, the start condition is required to satisfy both the following conditions (A) and (B), for example.
(A) The identical object determination in S13 is established (the object whose position is identified by the probe wave detection process and the object whose position is identified by the image detection process are allowed to be regarded as the identical object).
(B) The position of the object determined as identical has approached within a threshold value from the vehicle.

Note that the threshold value serving as the condition (B) is generally a limit distance at which it is expected that it will be difficult to detect a pedestrian in the probe wave detection process when the pedestrian further approaches the vehicle, and is set to, for example, 100 cm. Here, as described with reference to FIG. 5, in the identification of the position of the object using the ultrasonic sensors 9A to 9L, when the object is too far from the vehicle, the reflected wave cannot be obtained, and the position cannot be identified. Even when the object is too close to the vehicle, triangulation cannot be established depending on the position, and the position of the object may not be identified. The threshold value serving as the condition (B) is the distance between the vehicle and the object that is required to be secured at the minimum so as not to be in the state as illustrated in FIG. 5, that is, when the condition (B) is satisfied, it indicates that the position of the object is not allowed to be identified in the probe wave detection process as illustrated in FIG. 5. Note that the start condition of S17 does not necessarily include all of the above (A) and (B), and may include conditions other than (A) and (B).

Then, when it is determined that the start condition for continuously recognizing the object determined as identical as an assistance target of driving assistance of the vehicle is satisfied (S17: YES), an assistance target maintenance flag is read and turned ON (S18). As a result, in a state where the conditions (A) and (B) are satisfied, even when an unidentified period in which a position of the object determined as identical is not allowed to be identified in the probe wave detection process occurs thereafter, the object determined as identical is maintained as an assistance target in the unidentified period (S21).

On the other hand, when it is determined that the object determined as identical does not satisfy the start condition for continuously recognizing the object determined as identical as an assistance target of driving assistance of the vehicle (S17: NO), the process proceeds to S19.

In S19, the CPU 31 determines whether the ACC power supply is turned off. Then, when it is determined that the ACC power supply is turned off (S19: YES), the driving assistance processing program is terminated. On the other hand, when it is determined that the ACC power supply is not turned off (S19: NO), the process returns to S11.

In addition, in S20 executed when it is determined in S12 that the assistance target maintenance flag is turned ON (S12: YES), the CPU 31 determines whether the cancellation condition for canceling the recognition of the object determined as identical as an assistance target of driving assistance of the vehicle is satisfied. Here, the cancellation condition is required to satisfy at least one of the following conditions (C) to (E), for example.
(C) The type of the object determined as identical is not allowed to be identified in the image detection process.
(D) The position of the object determined as identical is not allowed to be identified in the image detection process.
(E) The identical object determination (the object whose position is identified by the probe wave detection process and the object whose position is identified by the image detection process are allowed to be regarded as the identical object) is established, and the position of the object determined as identical is farther from the vehicle than the threshold value.

The case where the condition (C) is satisfied includes, for example, a case where a pedestrian is too close to the camera to be recognized as a pedestrian. On the other hand, the case where the condition (D) is satisfied includes, for example, a case where the pedestrian has moved to a distant place where the pedestrian is out of the imaging range of the camera. The threshold value of the condition (E) is the same as the threshold value of the condition (B) described above. That is, the case where the condition (E) is satisfied is a case where there is a low possibility that the position of the object is not allowed to be identified in the probe wave detection process as illustrated in FIG. 5 after the identical object determination is established, and the object is maintained as the assistance target as the object determined as identical even if the assistance target maintenance flag is turned OFF. Note that the cancellation condition of S20 does not necessarily include all of the above (C) to (E), and may include conditions other than (C) to (E).

Then, when it is determined that the cancellation condition for canceling the recognition of the object determined as identical as an assistance target of driving assistance of the vehicle is satisfied (S20: YES), an assistance target maintenance flag is read and turned OFF (S22). As a result, when an unidentified period in which a position of the object determined as identical is not allowed to be identified occurs in the probe wave detection process thereafter, the object determined as identical is canceled from the assistance target (is not the object determined as identical).

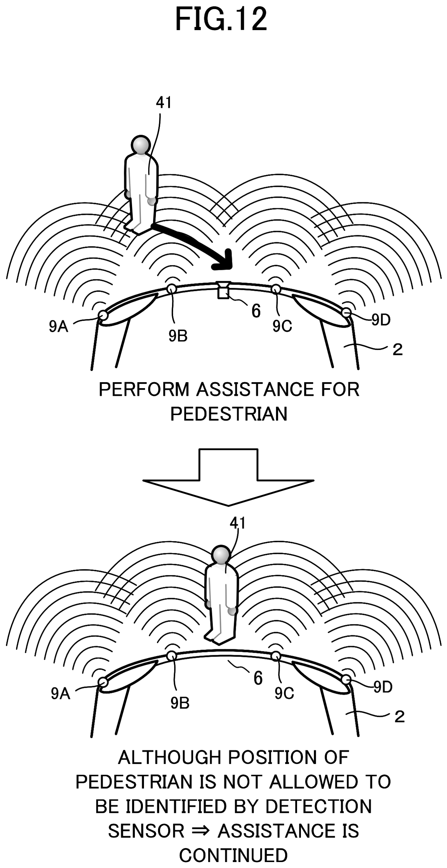

On the other hand, when it is determined that the cancellation condition for canceling the recognition of the object determined as identical as an assistance target of driving assistance of the vehicle is not satisfied (S20: NO), the assistance target maintenance flag remains turned ON, and the recognition of the object determined as identical as an assistance target of driving assistance of the vehicle in S15 is maintained (S21). As a result, for example, as illustrated in FIG. 12, even when the pedestrian 41 who was once recognized as the assistance target in the above-described S15 approaches a very close position of the vehicle 2 between the ultrasonic sensor 9B and the ultrasonic sensor 9C, triangulation is not established, and the position is not allowed to be identified by the probe wave detection process, the warning or the deceleration control for the pedestrian 41 can be continuously performed.

The position of the object determined as identical as the assistance target in the state where the assistance target maintenance flag is turned ON is identified using at least one of the position coordinates identified by the probe wave detection process and the position coordinates identified by the image detection process. Then, the warning or the deceleration control described above are performed based on the identified position coordinates of the object determined as identical. Specifically, if the positions of the object determined as identical can be identified by both the image detection process and the probe wave detection process in a case where the assistance target maintenance flag is turned ON, the CPU 31 continuously calculates the distance to each detection position with respect to the host vehicle, and performs the warning or the deceleration control when either one position approaches within a predetermined distance. On the other hand, in the unidentified period in which the position cannot be detected by the probe wave detection process, the above process is continued based on the position detected by the image detection process. However, in addition to identifying the position of the object determined as identical in the unidentified period based on the result of the image detection process, it is possible to estimate the position of the object determined as identical in the unidentified period from the position and the movement of the object determined as identical identified before the unidentified period comes (identified from displacement of positions between frames).

As described above in detail, according to the driving assistance device 1 and the computer program executed by the driving assistance device 1 according to the present embodiment, the probe wave detection process (S1 to S3) of identifying the position of the object by triangulation using the detection results by the ultrasonic sensors 9A to 9L is performed, the image detection process (S4 to S6) of identifying the position of the object around the vehicle is performed as a result of the image recognition process on the captured images captured by the front camera 6, the rear camera 7, and the side cameras 8A and 8B included in the vehicle, on condition that an object whose position is identified by the probe wave detection process and an object whose position is identified by the image detection process are allowed to be regarded as the identical object, the object determined as identical, which is regarded as the identical object, is set as an assistance target for which driving assistance of the vehicle is performed (S15), and even when an unidentified period in which a position of the object determined as identical is not allowed to be identified occurs in the probe wave detection process after the condition is satisfied, the object determined as identical is maintained as an assistance target in the unidentified period (S21), so that it is possible to perform assistance with high accuracy as compared with the related art. On the other hand, even when the ultrasonic sensors 9A to 9L cannot detect the position of the object that has been the assistance target on the way, the object can be continuously maintained as the assistance target.

In addition, even when the unidentified period occurs after the condition is satisfied and the position of the object determined as identical is within the threshold value from the vehicle, the object determined as identical is maintained as the assistance target in the unidentified period (S18, S21). Therefore, in a case where the object is too close to the ultrasonic sensors 9A to 9L to establish triangulation, and the position of the object is not allowed to be identified, the object can be continuously maintained as the assistance target. On the other hand, it is possible to prevent the object from being maintained as the assistance target in an inappropriate situation.

In addition, since maintaining the object determined as identical as the assistance target in the unidentified period ends on condition that the position of the object determined as identical is not allowed to be identified by the image detection process, the object determined as identical can be excluded from the assistance target when the object determined as identical moves to a distant place that is out of the imaging range of the imaging device.

In addition, since the position of the object determined as identical in the unidentified period is identified by the image detection process or is estimated from the position and the movement of the object determined as identical identified before the unidentified period, the current position of the object determined as identical can be grasped even in the unidentified period in which a position of the object determined as identical is not allowed to be identified by the probe wave detection process, and various kinds of assistance for the object determined as identical can be appropriately continued.

### [Supplementary note]

The embodiments described above also disclose the following inventions. In the following description, names and expressions of corresponding configurations in the embodiment and reference numerals used in the drawings are added in parentheses for reference. However, the components of each invention are not limited to this supplementary note.

### (Invention A)

The driving assistance device (1) according to claim 1, wherein in the image detection process, a type of an object is identified in addition to a position of the object (41), and maintaining the object determined as identical (41) as the assistance target in the unidentified period ends on condition that the type of the object determined as identical is not allowed to be identified by the image detection process.

According to this, for example, in a case where the object is too close to the imaging device to be recognized as the object, appropriate assistance cannot be performed, so that the object can be excluded from the assistance target.

It should be noted that the present invention is not limited to the above embodiments, and various improvements and modifications can be made without departing from the gist of the present invention.

For example, in the present embodiment, in order to provide highly accurate assistance for a pedestrian who is an object to be particularly noted for the vehicle, instead of detecting the object by the ultrasonic sensors 9A to 9L alone, the identical object determination is made, and assistance of combining image recognition results for captured images captured by cameras included in the vehicle is performed (FIG. 10). On the other hand, with respect to an object other than a pedestrian, the object may be detected by the ultrasonic sensors 9A to 9L alone as in the related art. Alternatively, the identical object determination may be made on the object other than a pedestrian, and on condition that the object whose position is identified by the probe wave detection process and the object whose position is identified by the image detection process are allowed to be regarded as the identical object, the object regarded as the identical object may be recognized as the assistance target for which driving assistance of the vehicle is performed.

Furthermore, in the present embodiment, an example in which the warning or the deceleration control is performed for an object approaching the host vehicle is described as assistance for the object, but the content of assistance can be changed as appropriate, and for example, only the warning may be performed. Alternatively, only the deceleration control may be performed. In addition to the warning or the deceleration control, the avoidance control and the like can be performed.

In the present embodiment, the four ultrasonic sensors 9A to 9D for detecting an object are installed at the front face of the vehicle 2, but the number of ultrasonic sensors is not necessarily four as long as the number is plural, and may be two, for example. The same applies to the rear face of the vehicle. Note that the positions and shapes of areas where triangulation is difficult to establish are different depending on the number and arrangement of ultrasonic sensors.

In the present embodiment, the detection results by all the ultrasonic sensors 9A to 9L included in the vehicle 2 are used as the detection results by the probe wave detection process used in the identical object determination process in S13, but the detection results by only some of the ultrasonic sensors may be used. For example, only the detection results by the ultrasonic sensors 9A to 9D disposed at the front face of the vehicle 2 and the ultrasonic sensors 9I to 9L disposed at the rear face of the vehicle 2 may be used.

Similarly, in the present embodiment, the detection results by all the cameras included in the vehicle 2 are used as the detection results by the image detection process used in the identical object determination process in S13, but the detection results by only some of the cameras may be used. For example, only the detection results by the front camera 6 disposed at the front face of the vehicle 2 and the rear camera 7 disposed at the rear face of the vehicle 2 may be used.

In the present embodiment, the driving assistance ECU 10 of the driving assistance device 1 is configured to execute the processes of the probe wave detection processing program (see FIG. 8), the image detection processing program (see FIG. 9), and the driving assistance processing program (FIG. 10), but the execution entity can be appropriately changed. For example, the process may be configured to be executed by the control unit of the liquid crystal display 4, the vehicle control ECU, the control unit of the navigation device, and other in-vehicle devices.

## Claims

1. A driving assistance device that
acquires detection results by a plurality of detection sensors installed at different places with respect to a vehicle, each of the detection sensors transmitting a probe wave to surroundings of the vehicle, the detection sensors being in a positional relationship in which a reception wave including a reflected wave obtained by the probe wave being reflected by an object around the vehicle is allowed to be mutually received,
performs a probe wave detection process of identifying a position of the object by triangulation using a first detection distance calculated by a detection sensor as a transmission source receiving a reflected wave of the probe wave as a direct wave and a second detection distance calculated by another detection sensor different from the transmission source receiving a reflected wave of the probe wave as an indirect wave, based on the acquired detection results by the detection sensors,
performs an image detection process of identifying a position of an object around the vehicle as a result of an image recognition process on a captured image captured by an imaging device included in the vehicle,
on condition that an object whose position is identified by the probe wave detection process and an object whose position is identified by the image detection process are allowed to be regarded as an identical object, sets an object determined as identical that is regarded as the identical object as an assistance target for which driving assistance of the vehicle is performed, and even when an unidentified period in which a position of the object determined as identical is not allowed to be identified by the probe wave detection process occurs after the condition is satisfied, maintains the object determined as identical as the assistance target in the unidentified period.

2. The driving assistance device according to claim 1, wherein even when the unidentified period occurs after the condition is satisfied and the position of the object determined as identical is within a threshold value from the vehicle, the object determined as identical is maintained as the assistance target in the unidentified period.

3. The driving assistance device according to claim 1, wherein maintaining the object determined as identical as the assistance target in the unidentified period ends on condition that the position of the object determined as identical is not allowed to be identified by the image detection process.

4. The driving assistance device according to any one of claims 1 to 3, wherein the position of the object determined as identical in the unidentified period is identified by the image detection process or is estimated from the position and a movement of the object determined as identical identified before the unidentified period.
